# EUROPÄISCHE PATENTSCHRIFT

(11) **EP 0 295 469 B1**
(45) Veröffentlichungstag und Bekanntmachung des Hinweises auf die Patenterteilung: **03.03.1993**
(21) Anmeldenummer: 88108429.7
(22) Anmeldetag: 26.05.1988
(51) Int. Cl.: H04M 9/00, H04M 3/42

(54) **Verfahren für eine rechnergesteuerte Vermittlungseinrichtung, insbesondere für eine sogenannte KEY-Fernsprechvermittlungseinrichtung**
Method for a calculator controlled switching device, especially for a so-called key telephone switching device
Méthode pour un dispositif de commutation commandé par calculateur, en particulier pour un dispositif de commutation téléphonique à touches

(30) Priorität: 16.06.1987 DE 3720152
(43) Veröffentlichungstag der Anmeldung: 21.12.1988
(73) Patentinhaber: SIEMENS AKTIENGESELLSCHAFT, 80333 München (DE)
(72) Erfinder: Lindemann, Werner, Dr.-Ing., D-4330 Mühlheim/Ruhr (DE); Böttger, Detlev, Dipl.-Ing., D-4600 Dortmund (DE); Reed, John, D-8000 München 90 (DE)

(56) Entgegenhaltungen:
- EP-A- 0 196 781
- US-A- 3 985 959
- PROCEEDINGS OF THE INTERNATIONAL SWITCHING SYMPOSIUM, 21.-25. September 1981, Montreal, "Session 33c", "Paper 1", Seiten 1-7; T. ISHIZUKI et al.: "A system architecture for EPABX with functional telephones"
- PATENT ABSTRACTS OF JAPAN, Band 10, Nr. 306 (E-446)[2362], 17. Oktober 1986, Seite 122 E 446 & JP-A-61 120 560
- PATENT ABSTRACTS OF JAPAN, Band 11, Nr. 27 (E-474)[2474], 27. Januar 1987, Seite 26 E 474 & JP-A-61 195 060
- ERICSSON REVIEW, Band 61, Mai 1984, Seiten 14-19, ISDN, Stockholm, SE; G. ERIKSSON et al.: "Voice and data workstations and services in the ISDN"

## Beschreibung

Die Erfindung betrifft ein Verfahren für eine rechnergesteuerte Vermittlungseinrichtung, insbesondere für eine sogenannte KEY-Fernsprechvermittlungseinrichtung, mit einem Programmspeicher und einem unter anderem anlagenspezifische Informationen enthaltenden Arbeitsspeicher und einer Koppeleinrichtung, über die - beeinflußt durch die Steuerrechnereinheit - ein der Übertragung von Nutzinformationen zwischen zwei Endeinrichtungen dienende Nutzverbindung über die hierfür vorgesehenen Anschlußeinheiten wirksam durchgeschaltet wird und zusätzlich zwischen der Steuerrechnereinheit und den jeweiligen Endeinrichtungen eine Steuerverbindung schaltbar ist, über die jeweils Informationen übertragbar sind die unter anderem aufgrund der bei der Betätigung von Ziffern-, Funktions- und/oder Namenstasten abgeleiteten Anreize gebildet werden und wobei aufgrund einer in der Gegenrichtung übertragenen Information ihr entsprechende beziehungsweise zugeordnete Informationsinhalte vorzugsweise auf dem Display der betreffenden Endeinrichtung zur Anzeige gebracht wird und ein aus einem Steuer-, Adress- bzw. Datenbus bestehender und die Systemkomponenten der Vermittlungseinrichtung oder der Steuerrechnereinheit verbindender Systembus vorhanden ist.

Die voraussetzungsgemäß vorgesehene Nutzverbindungsmöglichkeit und die davon getrennte Steuerverbindungsmöglichkeit kann als Nutzkanal bzw. als Steuerkanal physikalisch auf dem gleichen Übertragungsmedium getrennt durch unterschiedliche Zeitlagen raealisiert sein. Dies gilt beispielsweise für ein ISDN-Kommunikationssystem bei dem diese genannten Kanäle nur logisch voneinander getrennt sind und als Übertragungsmedium die Zweidraht-Teilnehmeranschlußleitung dient. Der Steuerkanal übernimmt als Zeichenkanal die im Zusammenhang mit einem Vermittlungsvorgang notwendigen Synchronisierungs- bzw. Signalisierungsvorgänge. Sowohl die genannte Nutzverbindung als auch die davon unabhängige Steuerverbindung kann auch durch jeweils ein Adernpaar realisiert werden.

Durch die "PROCEEDINGS OF THE ISS'81", Seiten 1 bis 7, ist eine Nebenstellenanlage bekannt, die es erlaubt, den vermittlungstechnischen Zustand von Teilnehmern und von Leitungen an den Endgeräten durch eine entsprechende Lampensteuerung anzuzeigen. Weiterhin können Informationen auf einem der Endeinrichtung funktionell zugehörigen Display dargestellt werden. Diese Darstellung erfolgt lediglich im Zusammenhang mit einer durch das Koppelfeld aufzubauenden Gesprächsverbindung. Es sind also lediglich verbindungsbezogene Darstellungen auf dem Display vorgesehen. Für den Fall, daß die Übertragungskapazität für die in den Zeitlücken eingefügte zusätzliche Datenübertragung nicht mehr ausreichend ist, wird ein eigener Kanal hierfür vorgesehen, der über das Koppelfeld geschaltet wird. Dies ist dann erforderlich, wenn Daten von einem parallel zu einem Endgerät angeschalteten Datenterminal oder von einem Facsimilegerät übertragen werden. Bei diesem bekannten Telefonsystem ist es nicht vorgesehen, daß ein Teilnehmer unabhängig vom Betriebszustand der beteiligten Endgeräte die Übermittlung einer bestimmten abgespeicherten Information zu einem anderen Endgerät, an dem diese Information dann angezeigt wird, initiieren kann.

Durch die US-A-3 985 959 ist ein Key-Telefonsystem bekannt, bei dem eine Anzeige von Zuständen der Endgeräte und der Leitungen durch die entsprechende Steuerung von Leuchtdioden erfolgt. Neben der für die Steuerung dieser Leuchtdioden und für die Übermittlung der Teilnehmeraktivitäten am Endgerät vorgesehenen Übertragung von Steuerinformationen über Steuerleitungen ist es möglich, über diese Steuerleitungen die von Datenterminals eingespeisten Daten zu einem entsprechenden Empfangsgerät zu übertragen.

Im Zusammenhang mit dem Aufbau einer Verbindung in einem Vermittlungssystem werden dem Benutzer optische und akustische Hinweise gegeben. So können beispielsweise für eine optische Bedienerführung Informationstexte auf dem an der Endeinrichtung vorhandenen Display angezeigt werden. Die hierzu notwendigen Informationen werden - wie dies beispielsweise durch die Veröffentlichung in "ERICCSON REVIEW", Band 61, Mai 1984, Seiten 1 bis 14, bekannt ist, bei ISDN-Kommunikationssystemen über einen der beiden Nutzkanäle übertragen.

Es ist die Aufgabe der Erfindung, bei einer Vermittlungseinrichtung der eingangs genannten Art die Kommunikationsmöglichkeiten zu erweitern. Dies wird dadurch erreicht, daß zu einer von ihren aktuellen vermittlungstechnischen Zuständen unabhängigen Kommunikation zwischen Endeinrichtungen ohne vermittlungstechnische Beeinflussung des Vermittlungssystems selektiv ein bestimmter von mehreren möglichen und in einem Speicher listenmäßig abgelegten Informationsblöcken durch eine den betreffenden Informationsblock bezeichnende und durch einen Benutzer von einer Endeinrichtung initiierten Meldung aus dem betreffenden Speicher ausgelesen und als empfangsseitig registrierbare digitale Information ausschließlich über die vorhandene Steuerverbindung ohne Einbeziehung der Koppeleinrichtung zu der aufgrund einer festen Adressenzuordnung vorgegebenen oder aufgrund einer entsprechend eingegebenen und die Meldung ergänzenden Adressenangabe der für die jeweils gewünschte Endeinrichtung zu dieser für die dort vorzunehmende Anzeige übertragen wird, so daß von der betreffenden Teilnehmerendeinrichtung als Rückantwort ein in gleicher Weise ausgebildeter Informationsblock an der die ursprüngliche Information iniziierenden Endeinrichtung zur Anzeige gebracht werden kann.

Es wird also neben der üblichen akustischen Kommunikation zusätzlich eine weitere Kommunikationsmöglichkeit ohne Einbeziehung der Koppeleinrichtung geschaffen. Diese zusätzliche Möglichkeit besteht vorzugsweise in einer visuellen Kommunikation, bei der kurze Informationen auf den an der jeweiligen Endeinrichtung vorhandenen Display in Textform dargestellt werden. Dies kann grundsätzlich parallel zu einer im Grenzfall für jede der beiden Endeinrichtungen gesondert bestehenden Gesprächsverbindung oder auch im Ruhezustand der Endeinrichtungen erfolgen. Es ist also möglich insbesondere bei speziellen Benutzerkonstellationen Informationen auszutauschen, ohne daß eine gegebenenfalls bestehende Gesprächsverbindung beeinträchtigt wird.

Gemäß einer Weiterbildung der Erfindung werden die bei der Steuerverbindung gegebenenfalls wechselseitig übertragenen unterschiedlichen, bestimmten Informationsblöcken zuzuordnenden oder sie darstellenden Informationen auf dem der beteiligten Endeinrichtung vorhandenen Display als Textinformation dargestellt. Es werden bei einer Anforderung für die Anzeige von Informationen, die vermittlungstechnische Betriebszustände und/oder Alarme betreffen diese Alarme gegenüber den gleichfalls darzustellenden Informationsblöcken aufgrund einer durch die Steuerrechnereinheit abgewickelten Displaysteuerung vorrangig zur Anzeige gebracht. Durch prioritätsgesteuerte Prozesse wird also unter Mitwirkung der Displaysteuerung bewirkt, daß ein Informationsaustausch über diese zweite Kommunikationsebene nur dann erfolgt, wenn keine dieser übergeordneten Informationen, z.B. Informationen die sich aus vermittlungstechnischen Aktivitäten ergeben, vorliegen.

Weitere vorteilhafte Ausgestaltungen der Erfindung sind den restlichen Unteransprüchen zu entnehmen.

Das erfindungsgemäße Verfahren wird nachstehend anhand einer Figur erläutert.

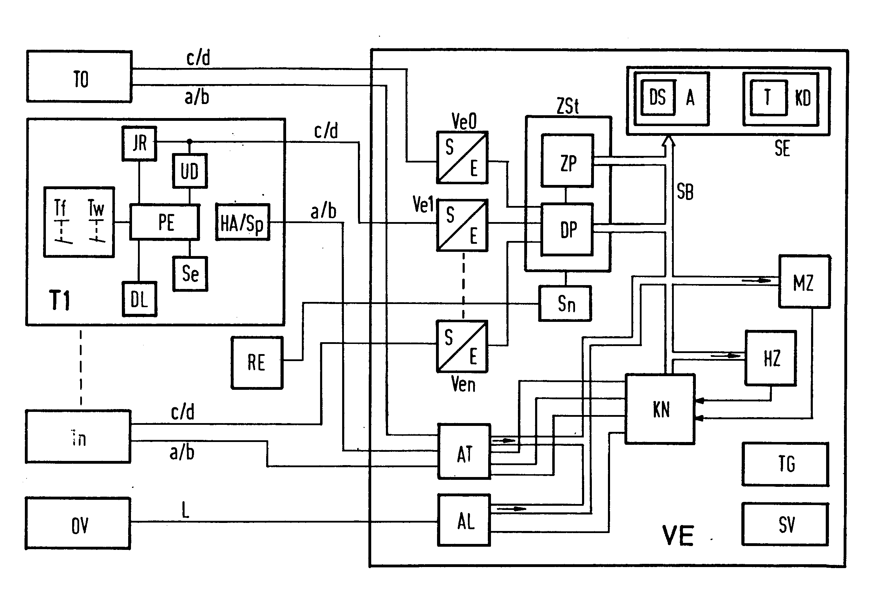

Die Figur zeigt im Blockschaltbild einige Funktionseinheiten einer Vermittlungseinrichtung VE, an die Teilnehmerendeinrichtungen T0...Tn angschlossen sind. Dieser Anschluß erfolgt im Ausführungsbeispiel bei einer Vermittlungseinrichtung der noch die analoge Sprachübertragung zugrunde liegen soll, sternförmig über eine jeweils vieradrige Anschlußleitung, die aus einem Sprechadernpaar a/b und einem Signalisierungsadernpaar c/d besteht. Bei einem ausschließlich digitalen System wären die Steuerverbindung und die für die Übertragung der Sprachinformationen vorgesehene Nutzverbindung auf einer zweiadrigen Anschlußleitung realisierbar wobei dann mindestens ein Nutzkanal und ein Steuerkanal für jede Endeinrichtung durch eine bestimmte Zeitlage realisiert werden könnte. Zur im wesentlichen prozeduralen Anpassung werden die Teilnehmerendeinrichtungen T0 bis Tn über eine Anschalteeinheit AT, die auch die Rufanschaltung beinhaltet mit der elektronischen Koppeleinrichtung KN verbunden. Für die zu einer öffentlichen Vermittlungsstelle OV oder zu einem privaten Netz führenden Leitungen L erfolgt dies über die Anschalteeinheit AL. Die Steuerungsaufgaben des Systems übernimmt die zentrale Steuerrechnereinheit ZSt, die über einen Systembus SB mit einer Speichereinheit SE, den genannten Anschalteeinheiten AT bzw. AL und den weiteren Systemkomponenten wie beispielsweise der Koppeleinrichtung KN, einer für die Bildung der Mehrfrequenzcodezeichen dienenden Einheit MZ und einer für die Erzeugung der Hörtöne zuständigen Einheit HZ verbunden ist. Die Aufgaben der zentralen Steuerung ZSt sind im Ausführungsbeispiel auf zwei Prozessoren verteilt. Der Prozessor ZP soll beispielsweise der vermittlungstechnischen Steuerung dienen und durch den Prozessor DP soll unter Einschaltung der ein Sendeteil S und ein Empfangsteil E enthaltenden Verarbeitungseinheit Ve die Signalisierungsbearbeitung erfolgen. Eine solche Verarbeitungseinheit Ve ist jedem Signalisierungsadernpaar c/d zugeordnet.

Die Prozessoren ZP und DP haben über dem Systembus SB Zugriff zu den in der Speichereinrichtung SE abgelegten Daten. Diese betreffen u.a. das gesamte Systemprogramm und die zu ihm gehörigen betriebstechnischen Daten. In dem Speicherteil KD sind die Kundendaten wie z.B. die Kurzrufnummer und die den einzelnen Teilnehmerendeinrichtungen zugeteilten Berechtigungen abgelegt. Das Konfigurieren dieser Daten kann z.B. über die Eingabetastatur einer als Betriebsterminal festlegbaren Endeinrichtung erfolgen. In einem solchen Kundendatenspeicher läßt sich auch jede Endeinrichtung als Datenstation programmieren. Für eine Datenübertragung ist dann ein Modem notwendig, zu dem die a/b-Adern umgeschaltet werden müssen. Nach Aufbau einer entsprechenden Verbindung kann dann durch eine vorgegebene Prozedur in den Zustand der Datenübertragung gewechselt werden. Als Teileinheit des Arbeitsspeichers A sollen in dem Speicherteil DS diejenigen Informationen abgelegt sein, die als vermitttlungstechnische Information dem an einer Endeinrichtung angeordneten Display DL dargestellt werden sollen. Für die einzelnen darzustellenden Informationen können unterschiedlichen Prioritäten festgelegt werden. Die jeweils aktuellen Signalisierungsinformationen werden ausgehend von der vermittlungstechnischen Situation durch die zentrale Steuerung ZST festgelegt und aus dem Speicher DS der jeweiligen Endeinrichtung übermittelt. Diese Information kann beispielsweise eine Aussage über den Zustand einer Endeinrichtung bzw. einer Leitung beinhalten oder sie kann einen aufgrund einer vom Teilnehmer vorgenommenen Termineingabe ausgelösten Alarm betreffen.

Neben den Verarbeitungseinheiten Ve0 bis Ven kann noch eine weitere Schnittstelle Sn vorgesehen sein, die beispielsweise hinsichtlich ihrer physikalischen Eigenschaften der CCITT-Empfehlung V24 entspricht. Über diese Schnittstelle können dann Protokolliergeräte wie z.B. eine im Zusammenhang mit der Gebührenerfassung eingesetzte Druckeinrichtung RE angeschlossen werden.

Neben der Herstellung einer über die a/b-Sprechadern und die Koppeleinrichtung KN verlaufenden Gesprächsverbindung besteht noch die Möglichkeit in einer zweiten Kommunikationsebene Informationen einer Teilnehmerendeinrichtung zu übermitteln bzw. zwischen zwei Teilnehmerendeinrichtungen auszutauschen. Diese Kommunikation wird ausschließlich über den Steuerteil der Vermittlungseinrichtung geführt und belastet somit die für eine Sprachverbindung vorgesehenen Wege nicht. Diese übermittelten Informationen werden in der jeweiligen Endeinrichtung T als kurze Textinformation auf dem dort vorhandenen Display DL angezeigt. Neben einer akustischen Kommunikation ist also eine visuelle Kommunikation möglich. Diese visuelle Kommunikation kann sowohl im Ruhezustand einer Endeinrichtung als auch während einer Gesprächsverbindung erfolgen.

Für die Teilnehmerendeinrichtung T0 sind einzelne Funktionskomponenten angedeutet. Über das jeweilige a/b-Adernpaar werden die Sprachinformationen übertragen. Mit diesen Sprechadern ist die Sprechschaltung Sp verbunden. Sie dient in Zusammenhang mit dem Handapperat HA der Verarbeitung der übertragenen Sprachinformationen und bildet den Leitungsabschluß. Mit der Einheit Ta ist das Vorhandensein einer Tastatur angedeutet, die mit der in jeder Endeinrichtung zur Steuerung ihrer Funktionen vorhandenen und z.B. durch einen Prozessor realsierten Steuereinheit Pe gekoppelt ist. Durch die Taste Tw wird das Vorhandensein einer normalen Wähltastatur symbolisiert. Die Taste Tf steht für eine Reihe von weiteren Tasten, durch deren Betätgung jeweils bestimmte Funktionsabläufe aktiviert werden können. Es kann beispielsweise signalisiert werden, daß eine Übermittlung in der erwähnten zweiten Kommunikationsebene gewünscht wird oder es kann eine bestimmte Textinformation, die individuell einer solchen Taste zugeordnet ist, zur Anzeige auf dem Display einer entsprechend ausgewählten Endeinrichtung abgerufen werden. Die betreffenden Informationen sind entweder in der Endeinrichtung selbst oder in der Vermittlungseinrichtung VE abgespeichert und ihre Darstellung auf dem Display DL erfolgt unter Mitwirkung der Steuereinheit Pe. In der Vermittlungseinrichtung kann diese Abspeicherung z.B. in Form einer Textliste T in einem zum Kundendatenspeicher KD gehörigen Speicherbereich erfolgen. Im Ausführungsbeispiel sollen die von der Vermittlungseinrichtung VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übertragen werden. Mit letzterer wird beispielsweise die an einer Endeinrichtung vorgenommene Betätigung einzelner Tasten signalisiert. Dies soll beispielsweise in Verbindung mit der Steuereinheit Pe durch die Einheit IR erfolgen. Die aufgrund der Spannungsmodulation an den jeweiligen c/d-Signalisierungsadern auftretenden Informationsbits werden in Zusammenwirken mit der Steuereinheit Pe durch die Einheit UD registriert und im Falle der visuellen Kommunikation über die genannte zweite Kommunikationsebene nach ihrer Auswertung und Decodierung beispielsweise als Textinformation an dem Display DL dargestellt.

Die für die Anzeige auf dem Display vorgesehenen kurzen Textinformationen können als fest vorgegebene unveränderliche Texte entweder in der Speichereinrichtung Se der einzelnen Endeinrichtung oder zentral in der Textliste T der Speichereinrichtung SE abgespeichert sein. Es ist dann nur durch eine entsprechende Meldung die gewünschte kurze Information aus der Anzahl der insgesamt möglichen Kurzinformationen aufgrund einer an der Endeinrichtung erfolgenden Eingabe auszuwählen. Neben fest abgespeicherten Textvarianten kann die Möglichkeit gegeben sein, daß die gewünschte Textinformation durch den Teilnehmer, der diese Information absetzen will, individuell zusammengestellt wird. Dies kann beispielsweise dadurch geschehen, daß bestimmte, im System bereits abgelegte, Worte bzw. Wortkombinationen in der jeweils gewünschten Reihenfolge aneinandergekettet werden. Jedem Wort bzw. jeder Wortkombination könnte beispielsweise eine Ziffer zugeordnet sein, so daß dann durch die aufeinanderfolgende Betätigung der jeweils zugeordneten Zifferntaste der Wähltastatur die Zusammenstellung der Textinformation erfolgen kann. Bei Vorhandensein einer alphanumerischen Tastatur könnte auch die Textinformation durch die Eingabe der zugehörigen einzelnen Buchstaben vom jeweiligen Endgerät aus erfolgen. Diese Eingaben können zunächst in einem entsprechenden Speicher im Endgerät zwischengespeichert und anschließend im zentralen Speicher SE abgelegt werden.

Neben der Auswahl bzw. der Zusammenstellung der darzustellenden Textinformation ist noch eine Information darüber notwendig, an welcher der Endeinrichtungen T0...Tn diese dort unabhängig von deren vermittlungstechnischem Zustand am Display angezeigt werden soll. Diese Adressenzuordnung kann bei einem Vermittlungssystem, für das an den einzelnen Endeinrichtungen, zumindest für einen Teil der vorhandenen Endeinrichtungen, sogenannte Teilnehmertasten vorgesehen sind, durch Betätigung der betreffenden Teilnehmertaste erfolgen. Solche Teilnehmertasten, über die also unter Umgehung der Wahltastatur unmittelbar durch deren Betätigung eine Verbindung zu einem anderen Teilnehmer herstellbar ist, sind z.B. grundsätzlich bei den sogenannten Key-Vermittlungssystemen vorhanden. Führt die über die Signalisierungsadern c/d übermittelte Information bei der Bewertung dieser Information durch die zentrale Steuereinheit ZSt zu dem Ergebnis, daß bei dem gewünschten Partner die bereits vorabbestimmte Textinformation nicht zentral in die Vermittlungseinrichtung, sondern in dem Speicher Se des betreffenden Endgerätes abgelegt wird, so wird zu diesem Endgerät lediglich eine diese Information kennzeichnende Meldung übertragen. Aufgrund dieser Meldung wird dann die Anzeige auf dem Display DL vorgenommen. Die Übermittlung der Informationen von der zentralen Steuerung zu der Steuereinheit der jeweiligen Endeinrichtung kann grundsätzlich paketorientiert erfolgen. Bei kleineren Vermittlungssystemen kann jedoch von einer solchen Normierung abgesehen werden. Für die zu übertragende Textinformation kann stattdessen beispielsweise ein Informationsblock fest vorgegebener Länge von beispielsweise 4 Byte übermittelt werden. Sollte dies für die darzustellende Information nicht ausreichen, so kann eine entsprechende Kettung von solchen Informationsblöcken erfolgen.

Ist bei einer Vermittlungsanlage VE für bestimmte Teilnehmerstationen eine spezielle gegenseitige Konstellation vorgegeben, wie dies beispielsweise bei den sogenannten Chef/Sekretär-Stationen der Fall ist, so ist für die über die Steuerverbindung bzw. bei einer anderen Art von Anlage über den Steuerkanal geführte visuelle Kommunikation keine zusätzliche Adressenzuordnung vorzunehmen. Diese feste Zuordnung wird durch Auslesen der diesbezüglich in dem Kundendatenspeicher KD enthaltenen Informationen durch die zentrale Steuereinheit ZSt gewonnen. Damit steht der jeweilige Partner fest. Nach der Information, daß über die zweite Kommunikationsebene eine Information übermittelt werden soll, ist nun durch den Teilnehmer lediglich noch die Art der Information einzugeben. Dies kann wiederum entweder über eine festgelegte Prozedur durch Betätigung der entsprechenden Zifferntasten erfolgen oder es ist eine einer bestimmten Textinformation fest zugeordnete Taste zu betätigen. In einem solchen Fall würde also jede auf einem Display darzustellende Information eine Taste erfordern. Es wäre aber auch denkbar, einzelne unterschiedliche Textinformationen auch durch mehrfache Betätigung einer solchen Texttaste aus der Textliste T abzurufen. Dies hat dann in Verbindung mit einer Zeitauswertung zu erfolgen, um die einfache bzw. die mehrfache Betätigung feststellen zu können. Die Anwendung solcher für den Abruf einer Textinformation vorgesehenen Tasten wäre jedoch nur bei einer geringen Gesamtanzahl solcher möglichen Textinformationen sinnvoll. Es kann also beispielsweise die Sekretärin eine kurze Information an die Chefstation absetzen, unabhängig davon, ob über diese Station eine interne oder externe Sprachverbindung besteht. So kann beispielsweise via Display durch einen Tastendruck die Information über einen anstehenden Anruf übermittelt werden. Von der diese Information empfangenden Teilnehmerstation läßt sich dann eine Antwort auf das Display der solchermaßen informierenden Teilnehmerstation ausgeben. Es können also kurze Informationen ausgetauscht werden, ohne daß Gesprächsverbindungen, die für die betreffenden Teilnehmerstationen bestehen, in irgendeiner Form beeinträchtigt werden.

Eine Information über diesen zweiten Kommunikationsweg kann auch ohne manuelle Beeinflussung durch einen Teilnehmer stattfinden. Jeder für eine bestimmte Teilnehmerstation vorgesehene Anruf kann durch eine entsprechende Festlegung dazu führen, daß - gesteuert durch die Steuereinrichtung ZSt - eine vorbestimmte Textinformation aus der Textliste T ausgelesen und auf dem Display derjenigen Teilnehmerstation, die eine Gesprächsverbindung anforderte, dargestellt werden. Vermittels einer solchen automatischen Antwortmöglichkeit kann also beispielsweise einem Anrufenden mitgeteilt werden, daß sich der gewünschte Teilnehmer im Urlaub befindet oder daß er ab einer bestimmten Zeit wieder erreichbar ist. Die Textinformation für eine solche automatische Antwort kann beispielsweise aus einer bestimmten Anzahl von im System abgelegten Worten, die aneinanderzuketten sind, von einem Teilnehmer individuell zusammengestellt werden. Bei vorhandener alphanumerischer Tastatur kann die Textinformation durch individuelle Eingabe der Buchstaben von der jeweiligen Endeinrichtung aus zur Abspeicherung der zentralen Steuereinrichtung ZSt übermittelt werden.

Im Ausführungsbeispiel ist mit TG der für die gesamte Taktversorgung vorhandene Taktgenerator und mit SV die der Stromversorgung dienende Einheit bezeichnet.

## Patentansprüche

1. Verfahren für eine rechnergesteuerte Vermittlungseinrichtung, insbesondere für eine sogenannte Key-Fernsprechvermittlungseinrichtung, mit einem Programmspeicher und einem unter anderem anlagenspezifische Informationen enthaltenden Arbeitsspeicher und einer Koppeleinrichtung, über die - beeinflußt durch die Steuerrechnereinheit - ein der Übertragung von Nutzinformationen zwischen zwei Endeinrichtungen dienende Nutzverbindung über die hierfür vorgesehenen Anschlußeinheiten wirksam durchgeschaltet wird und zusätzlich zwischen der Steuerrechnereinheit und den jeweiligen Endeinrichtungen eine Steuerverbindung schaltbar ist, über die jeweils Informationen übertragbar sind, die unter anderem aufgrund der bei der Betätigung von Ziffern, Funktions- und/oder Namenstasten abgeleiteten Anreize gebildet werden und wobei aufgrund einer in der Gegenrichtung übertragenen Information ihr entsprechende bzw. zugeordnete Informationsinhalte, vorzugsweise auf dem Display der betreffenden Endeinrichtung zur Anzeige gebracht wird und ein aus einem Steuer-, Adreß- bzw. Datenbus bestehender und die Systemkomponenten der Vermittlungseinrichtung oder der Steuerrechnereinheit verbindender Systembus vorhanden ist,
**dadurch gekennzeichnet,**
daß zu einer von ihren aktuellen vermittlungstechnischen Zuständen unabhängigen Kommunikation zwischen Endeinrichtungen ohne vermittlungstechnische Beeinflussung des Vermittlungssystems (VE) selektiv ein bestimmter von mehreren möglichen und in einem Speicher (T bzw. Se) listenmäßig abgelegten Informationsblöcken durch eine den betreffenden Informationsblock bezeichnenden und durch einen Benutzer von einer Endeinrichtung (T0 ... Tn) initiierten Meldung aus dem betreffenden Speicher (T bzw. Se) ausgelesen wird und als empfangsseitig registrierbare digitale Information ausschließlich über die vorhandene Steuerverbindung (c/d) ohne Einbeziehung der Koppeleinrichtung (KN) zu der aufgrund einer festen Adressenzuordnung vorgegebenen oder aufgrund einer entsprechend eingegebenen und die Meldung ergänzenden Adressenangabe für die jeweils gewünschte Endeinrichtung zu dieser für die dort vorzunehmende Anzeige übertragen wird, so daß von der betreffenden Teilnehmerendeinrichtung als Rückantwort ein in gleicher Weise ausgebildeter Informationsblock an der die ursprüngliche Information initiierenden Endeinrichtung zur Anzeige gebracht werden kann.

2. Verfahren nach Anspruch 1,
**dadurch gekennzeichnet,**
daß die auf der Steuerverbindung (c/d), gegebenenfalls wechselseitig übertragenen unterschiedlichen, bestimmten Informationsblöcken zuzuordnenden oder sie bereits darstellenden Informationen auf dem an den beteiligten Endeinrichtungen (T0 ... Tn) vorhandenen Display (DL) als Textinformation dargestellt werden und daß bei einer Anforderung für die Anzeige von Informationen, die vermittlungstechnische Betriebszustände und/oder Alarme betreffen, diese gegenüber den gleichfalls darzustellenden Informationsblöcken aufgrund einer durch die Steuerrechnereinheit (ZSt) abgewickelten Displaysteuerung vorrangig zur Anzeige gebracht wird.

3. Verfahren nach Anspruch 1 oder 2,
**dadurch gekennzeichnet,**
daß nach der die Notwendigkeit einer Übermittlung grundsätzlich charakterisierenden Meldung durch weitere an der Endeinrichtung erzeugbare zusätzliche Kennzeichen (z. B. Ziffernprozedur bzw. ein- oder mehrmaliges Betätigen einer Textfunktionstaste) eine bestimmter der für die insgesamt listenmäßig abgespeicherten Funktionsblöcke oder Teileinheiten vorgesehenen Speicherplätze zum Auslesen der zugeordneten Speicherinformation gezielt angesteuert wird.

4. Verfahren nach Anspruch 3,
**dadurch gekennzeichnet,**
daß die listenmäßige Abspeicherung der Informationsblöcke oder ihrer Teileinheiten zentral in einem bestimmten Teilbereich des vorhandenen Arbeitsspeichers erfolgt.

5. Verfahren nach Anspruch 3,
**dadurch gekennzeichnet,**
daß die listenmäßige Abspeicherung der Informationsblöcke bzw. der sie bildenden Teileinheiten in einer in der jeweiligen Endeinrichtung (T0 ... Tn) vorhandenen Speichereinheit (Se) erfolgt und daß aufgrund der von der Steuerrechnereinheit (ZSt) übermittelten und den jeweiligen Listenplatz kennzeichnenden Information dessen Inhalt zur Darstellung auf dem Display (DL) ausgelesen wird.

6. Verfahren nach Anspruch 1 bis 5,
**dadurch gekennzeichnet,**
daß sowohl die die Notwendigkeit der Übermittlung charakterisierende Meldung als auch die Auswahl des gewünschten Informationsblockes durch die Betätigung ein und derselben Funktionstaste erfolgt und daß bei einer nicht im Kundendatenspeicher (KD) fest vorgegebenen Adressenzuordnung mit der anschließend erfolgten Betätigung einer Namenstaste durch die diesen Tastendruck registrierende und bewertende Steuerrechnereinheit (ZSt) das dieser Taste im Kundendatenspeicher (KD) zugeordnete jeweilige Übermittlungsziel bestimmt wird.

7. Verfahren nach Anspruch 1 bis 5,
**dadurch gekennzeichnet,**
daß durch die Betätigung einer bestimmten Funktionstaste sowohl die Meldung als auch die Auswahl des Informationsblockes bestimmt ist und daß der betreffende Informationsblock zu einer Mehrzahl von im Arbeitsspeicher als anlagenspezifische Information enthaltenen Zielen übermittelt wird.

8. Verfahren nach Anspruch 4 oder 5,
**dadurch gekennzeichnet,**
daß die im Speicher listenmäßig abgespeicherten Informationsblöcke aus vorab eingespeicherten Informationen bestehen.

9. Verfahren nach Anspruch 4 oder 5,
**dadurch gekennzeichnet,**
daß bei einer durch den Teilnehmer beabsichtigten Übermittlung ein Informationsblock unmittelbar vor der gewünschten Übermittlung zusammengestellt und abgespeichert wird.

10. Verfahren nach Anspruch 1,
**dadurch gekennzeichnet,**
daß sowohl der Nutzkanal als auch der Steuerkanal durch je eine Leitungsverbindung (a/b) bzw. (c/d) gebildet wird.

## Claims

1. Method for a computer-controlled switching system, preferably for a so-called key telephone switching system, having a program memory and a main memory, which contains inter alia system-specific information, and a coupling device, via which - influenced by the control computer unit - an information connection serving for the transmission of useful information between two terminal devices is effectively switched through via the interface units provided for this purpose, and in addition a control connection can be connected between the control computer unit and the respective terminal devices, via which control connection in each case it is possible to transmit information formed, inter alia, as a result of the events derived during the actuation of digits, function keys and/or name keys, and in which, as a result of an information item transmitted in the opposite direction, information contents corresponding thereto or assigned thereto can be displayed, preferably on the display of the respective terminal device, and a system bus comprising a control bus, address bus and data bus is present which connects the system components of the switching system or the control computer unit, characterised in that, for a communication between terminal devices that is independent of their current switching states without switching-oriented influencing of the switching system (VE), a particular one of a plurality of possible information blocks stored in a memory (T or Se) in list form is selectively read out from the respective memory (T or Se) by means of a message that designates the respective information block and was initiated by a user of a terminal device (T0...Tn), and is transmitted as digital information that can be registered at the receiving end solely via the control connection (c/d) present without the participation of the coupling device (KN) to the terminal device that is predetermined on the basis of a fixed address assignment or on the basis of a correspondingly entered address specification for the respective desired terminal device supplementing the message, for the displaying to be carried out there, so that as a response from the respective subscriber terminal device an information block formed in the same way can be displayed at the terminal device initiating the original information.

2. Method according to Claim 1, characterised in that the information which is to be assigned to, or already represents, different specific information blocks and is transmitted, possibly bidirectionally, on the control connection (c/d) is represented as text information on the display (DL) present at the participating terminal devices (T0...Tn), and in that, in the case of a request for information to be displayed which relates to switching-oriented operating states and/or alarms, said information blocks are displayed with priority over the ones to be likewise displayed by means of a display control function handled by the control computer unit (ZSt).

3. Method according to Claim 1 or 2, characterised in that, following the message characterising the basic necessity of a transmission, a particular one of the memory locations provided for the function blocks or subunits stored together in list form is addressed specifically by further additional codes (for example digit procedure or actuation of a text function key once or several times) that can be generated at the terminal device for reading out the associated memory information.

4. Method according to Claim 3, characterised in that the storage in list form of the information blocks or of their subunits is carried out centrally in a specific subarea of the main memory present.

5. Method according to Claim 3, characterised in that the storage in list form of the information blocks or of the subunits forming them is carried out in a memory unit (Se) present in the respective terminal device (T0...Tn), and in that, on the basis of the information that is transmitted from the control computer unit (ZSt) and indicates the respective list location, the contents thereof are read out for representation on the display (DL).

6. Method according to Claim 1 to 5, characterised in that both the message characterising the necessity of transmission and the selection of the desired information block are performed by actuating one and the same function key, and in that, when an address assignment is not permanently predetermined in the customer data memory (KD), with the subsequent actuation of a name key the respective transmission destination assigned to said key in the customer data memory (KD) is determined by the control computer unit (ZSt), which registers and evaluates said key depression.

7. Method according to Claim 1 to 5, characterised in that as a result of a particular function key being actuated, both the message and the selection of the information block are determined, and in that the respective information block is transmitted to a plurality of destinations contained in the main memory as system-specific information.

8. Method according to Claim 4 or 5, characterised in that the information blocks stored in the memory in list form comprise previously stored information.

9. Method according to Claim 4 or 5, characterised in that, in the case when transmission is intended by the subscriber, an information block is assembled and stored immediately before the desired transmission.

10. Method according to Claim 1, characterised in that both the information channel and the control channel are formed in each case by one line connection (a/b) and (c/d) respectively.

## Revendications

1. Procédé pour un dispositif de commutation assisté par ordinateur, notamment pour ce qu'on appelle un dispositif de commutation téléphonique à clés, comportant une mémoire de programmes et une mémoire de travail contenant notamment des informations spécifiques à des installations, et un dispositif de couplage, par l'intermédiaire duquel - d'une manière influencée par l'unité formant calculateur de commande - une liaison utile utilisée pour la transmission d'informations utiles entre deux terminaux est établie de façon active par l'intermédiaire des unités de raccordement prévues à cet effet, et en outre, entre l'unité formant calculateur de conmande et les terminaux respectifs, une liaison de commande peut être commutée, liaison qui permet de transmettre respectivement des informations qui sont formées notamment sur la base des incitations obtenues lors de l'actionnement de touches de chiffres, de touches fonctionnelles et/ou de touches portant des noms, et selon lequel sur la base d'une information transmise en sens opposé, le contenu correspondant ou associé de ces informations est affiché de préférence au dispositif d'affichage du terminal considéré, et il est prévu un bus système qui est constitué par un bus de commande, un bus de transmission d'adresses et un bus de transmission de données et qui raccorde les composants du système du dispositif de commutation ou de l'unité formant calculateur de commande,
caractérisé par le fait
que pour une communication, indépendante de leurs états techniques de commutation actuels, entre des terminaux, un bloc déterminé faisant partie de plusieurs blocs d'informations possibles, mémorisé sous la forme d'une liste dans une mémoire (T ou Se), est lu de façon sélective, sans que ceci n'influe sur la technique de commutation du système de commutation (VE), à partir de la mémoire considérée (T ou Se), par une signalisation désignant le bloc d'informations considéré et déclenché par un utilisateur d'un terminal (T0...Tn) et est transmise, en tant qu'information numérique pouvant être enregistrée côté réception, exclusivement par l'intermédiaire de la liaison de commande existante (c/d), sans insertion du dispositif de couplage (KN), au terminal respectivement désiré, prédéterminé sur la base d'une association fixe d'adresses ou sur la base d'une indication d'adresse de ce terminal, qui est introduite de façon correspondante et complète la signalisation, pour l'affichage devant être exécuté dans ce terminal, de sorte que le terminal concerné peut déclencher, en tant que réponse en retour, l'affichage d'un bloc d'informations, agencé de la même manière, dans le terminal déclenchant l'information initiale.

2. Procédé suivant la revendication 1, caractérisé en ce
que les informations qui doivent être associées à différents blocs déterminés d'informations, qui doivent être transmis, éventuellement en alternance, dans la liaison de commande c/d, ou qui représentent déjà ces blocs sont représentées sous la forme d'une information de texte sur le dispositif d'affichage (DL) présent dans les terminaux participants (T0...Tn) et que dans le cas d'une demande d'affichage d'informations, qui concernent des états de service techniques de commutation et/ou des alarmes, ces informations sont affichées de façon prioritaire par rapport aux blocs d'informations devant être également représentés, sur la base d'une commande d'affichage exécutée par l'unité formant calculateur de commande (ZSt).

3. Procédé suivant la revendication 2 ou 3, caractérisé en ce
qu'après la signalisation qui caractérise fondamentalement la nécessité d'une transmission, au moyen d'autres signaux caractéristiques supplémentaires pouvant être produits dans le terminal (par exemple procédure de sélection de chiffres ou actionnement unique ou répété d'une touche de fonction de texte), l'un déterminé des emplacements de mémoire prévus pour les blocs fonctionnels ou les unités partielles globalement mémorisées sous la forme d'une liste, est commandée volontairement pour la lecture de l'information de mémoire associée.

4. Procédé suivant la revendication 3, caractérisé par le fait
que la mémorisation, sous la forme d'une liste, des blocs d'informations ou de leurs unités partielles s'effectue centralement dans une zone partielle déterminée de la mémoire de travail existante.

5. Procédé suivant la revendication 3, caractérisé en ce que la mémorisation, sous la forme d'une liste, des blocs d'informations ou des unités partielles constituant ces blocs s'effectue dans une unité de mémoire (Se) présente dans le terminal respectif (T0...Tn) et que sur la base de l'information retransmise par l'unité formant calculateur de commande (ZSt) et caractérisant l'emplacement respectif de la liste, le contenu en cet emplacement est lu pour sa représentation sur le dispositif d'affichage (DL).

6. Procédé suivant les revendication 1 à 5, caractérisé par le fait
qu'aussi bien la signalisation, qui caractérise la nécessité de la retransmission, que la sélection du bloc d'informations désiré s'effectuent par actionnement d'une même touche de fonction et que, dans le cas d'une association d'adresses non prédéterminée de façon fixe dans la mémoire (KD) de données du client, lors de l'actionnement exécuté ultérieurement d'une touche de nom, la destination respective de la retransmission, qui est associée à cette touche dans la mémoire (KD) de données du client, est déterminée par l'unité formant calculateur de commande (ZSt) qui enregistre et évalue l'enfoncement de cette touche.

7. Procédé suivant les revendications 1 à 5, caractérisé par le fait
que sous l'effet de l'actionnement d'une touche de fonction déterminée, aussi bien la signalisation que la sélection du bloc d'informations sont déterminées et que le bloc considéré d'informations est retransmis à une multiplicité de destinations qui sont contenues dans la mémoire de travail sous la forme d'une information spécifique du point de vue de l'installation.

8. Procédé suivant la revendication 4 ou 5, caractérisé par le fait que les blocs d'informations mémorisés sous la forme d'une liste dans la mémoire sont constitués par des informations mémorisées au préalable.

9. Procédé suivant la revendication 4 ou 5, caractérisé par le fait
que dans le cas d'une retransmission envisagée par l'abonné, un bloc d'informations est assemblé et mémorisé juste avant la retransmission désirée.

10. Procédé suivant la revendication 1, caractérisé par le fait
qu'aussi bien le canal utile que le canal de commande sont formés par des lignes de jonction (a/b) et (c/d).
